# EUROPEAN PATENT APPLICATION

(11) **EP 3 546 794 A1**
(43) Date of publication of application: **02.10.2019**
(21) Application number: 17873035.4
(22) Date of filing: 09.11.2017
(51) Int. Cl.: F16H 13/08, H02K 7/116

(54) **ELECTRIC ACTUATOR**

(30) Priority: 22.11.2016 JP 2016226875
(71) Applicant: NTN Corporation, Osaka-shi, Osaka 550-0003 (JP)
(72) Inventor: MATSUTO, Takushi, Iwata-shi Shizuoka 438-8510 (JP); USHIDA, Kimihito, Iwata-shi Shizuoka 438-8510 (JP); KAWAI, Masahiro, Iwata-shi Shizuoka 438-8510 (JP); KATO, Akio, Iwata-shi Shizuoka 438-8510 (JP)
(74) Representative: Grünecker Patent- und Rechtsanwälte PartG mbB
(86) International application number: PCT/JP2017/040474
(87) International publication number: WO 2018/096939

(57) **Abstract**

An electric actuator includes: a motor section (5) including a stator (51) and a rotor (52); a driving-source output shaft (6), which is arranged on a radially inner side of the rotor, and is configured to output rotation of the rotor; and a speed reducer (2) connected to the driving-source output shaft. The driving-source output shaft (6) is hollow, and the speed reducer (2) includes a planetary-traction-drive speed reducer.

## Description

### Technical Field

The present invention relates to an electric actuator.

### Background Art

As an electric actuator of a rotational type configured to reduce a speed of an output of a motor through use of a speed reducer, and transmit the output reduced in speed to an object to be driven, an electric actuator described in JP 2013-169125 A (Patent Literature 1) is known. In this actuator of the rotational type, a planetary gear mechanism is used as the speed reducer.

### Citation List

Patent Literature 1: JP 2013-169125 A

### Summary of Invention

### Technical Problem

When the gear mechanism is employed as the speed reducer as in the actuator described in Patent Literature 1, a backlash is unavoidable, and an increase in responsiveness is thus limited. Moreover, noise is caused by meshing between gears, and the electric actuator is not suited for an application requiring silence.

As the electric actuator, in addition to the rotational motion type configured to output a rotational motion as described in Patent Literature 1, there exists a linear motion type configured to transmit the rotational motion output from the motor to a ball screw through the speed reducer, to thereby convert the rotational motion to a linear motion. When an electric actuator of the linear motion type is produced based on the actuator described in Patent Literature 1, a length in the axial direction greatly increases.

The present invention has been made in view of the above-mentioned problems, and therefore has an object to provide an electric actuator having high responsiveness and silence.

### Solution to Problem

As technical measures for achieving the above-mentioned object, according to one embodiment of the present invention, there is provided an electric actuator, comprising: a motor section comprising a stator and a rotor; a driving-source output shaft, which is arranged on a radially inner side of the rotor, and is configured to output rotation of the rotor; and a speed reducer connected to the driving-source output shaft, wherein the driving-source output shaft is hollow, and wherein the speed reducer comprises a planetary-traction-drive speed reducer.

A backlash is reduced through employment of the planetary-traction-drive speed reducer as the speed reducer in such a manner. Therefore, an increase in responsiveness and an increase in silence of the electric actuator can be achieved.

Moreover, the driving-source output shaft is hollow, and a space thus exists on the radially inner side thereof. Accordingly, a member of a motion conversion mechanism that moves linearly, for example, a ball screw shaft, may be arranged on the radially inner side of the driving-source output shaft. As a result, interference of this member with the motor section and the speed reducer can be prevented when the member moves linearly, and the ball screw shaft of the motion conversion mechanism can be overlapped with both the motor section and the speed reducer in the radial direction, thereby being capable of coaxially arranging the motor section, the speed reducer, and the ball screw shaft. Thus, the electric actuator of the linear motion type can be downsized. Moreover, the rotational driving source can be shared between an electric actuator of the rotational motion type and an electric actuator of the linear motion type, and hence a cost reduction can be achieved in both of the electric actuators.

A planetary roller of the planetary-traction-drive speed reducer may be formed of a rolling bearing. When the traction-drive speed reducer is employed, a constant load for generating a traction acts on each of rolling contact portions inside the speed reducer, and a fluctuating load is not generated in a torque transmission portion between gears as in a gear mechanism such as a planetary-gear speed reducer. Thus, even when not needle rollers, but balls are used as rolling elements of the rolling bearing, a sufficient load bearing performance can be secured. Accordingly, as the rolling bearing forming the planetary roller, not a needle roller bearing used for a high torque, but a deep groove ball bearing used for a low torque can be used, and a torque reduction in the electric actuator is thus achieved.

An edge load in the rolling contact portions in the speed reducer can be suppressed by forming crowning on any one of or both of the planetary roller and a sun roller. As a result, an increase in durability of the planetary-traction-drive speed reducer can be achieved.

An electric actuator of the rotational motion type can be formed through connection of a final output shaft to an output side of the speed reducer of the above-mentioned rotational driving source.

Moreover, an electric actuator of the linear motion type can be formed through connection of a motion conversion mechanism to the output side of the speed reducer of the above-mentioned rotational driving source.

### Advantageous Effects of Invention

According to the present invention, it is possible to provide an electric actuator having high responsiveness and silence.

### Brief Description of Drawings

FIG. 1 is a vertical sectional view of an electric actuator according to a first embodiment.
FIG. 2 is a transverse sectional view of the electric actuator taken along the line B-B in FIG. 1.
FIG. 3 is a transverse sectional view of the electric actuator taken along the line C-C in FIG. 1.
FIG. 4 is an enlarged sectional view of a region X in FIG. 1.
FIG. 5 is an enlarged sectional view of a region Y in FIG. 1.
FIG. 6 is a vertical sectional view of an electric actuator according to a second embodiment.
FIG. 7 is an enlarged vertical sectional view of a deep groove ball bearing forming a planetary roller.

### Description of Embodiments

Detailed description is now given of an electric actuator according to embodiments of the present invention with reference to the drawings.

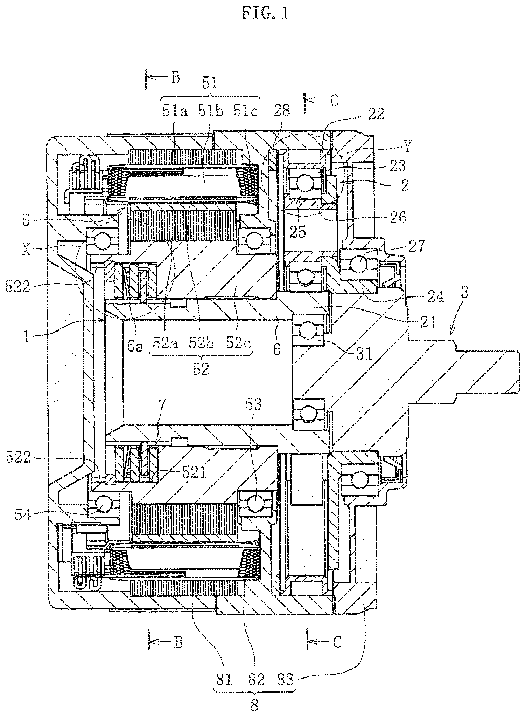

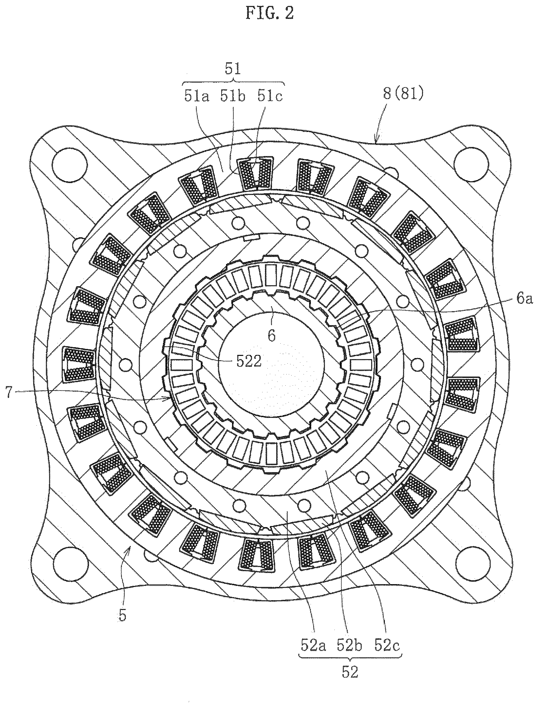

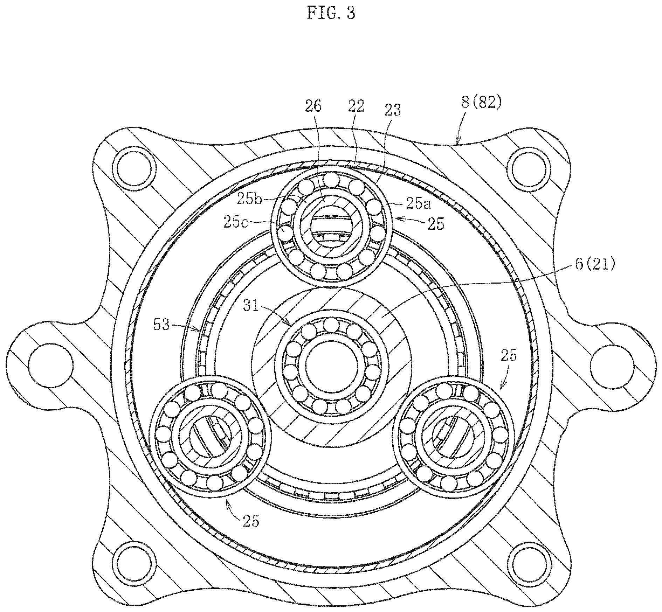

FIG. 1 is a vertical sectional view of an electric actuator of a rotational motion type as an electric actuator according to a first embodiment. FIG. 2 is a sectional view taken along the line B-B in FIG. 1. FIG. 3 is a sectional view taken along the line C-C in FIG. 1. This electric actuator of the rotational motion type can be used, for example, to drive a robot arm, or to automate or assist operations on a transmission, a steering mechanism, and a brake in a vehicle such as a motor vehicle.

As illustrated in FIG. 1, the electric actuator according to the present invention comprises a rotational driving source 1, a speed reducer 2, and a final output shaft 3 as principal components . The speed reducer 2 is arranged on one side of the rotational driving source 1 in an axial direction thereof, and is connected to an output side of the rotational driving source 1. The final output shaft 3 is connected to an output side of the speed reducer 2. Description is first given of a structure of the rotational driving source 1 out of the above-mentioned respective components.

The rotational driving source 1 comprises a motor section 5, a driving-source output shaft 6, and a torque limiter 7. As illustrated in FIG. 1 and FIG. 2, out of the above-mentioned respective components, the motor section 5 is formed of an electric motor comprising a stator 51 and a rotor 52. The stator 51 is fixed to a casing 8. The rotor 52 is arranged on a radially inner side of the stator 51 so as to be opposed to the stator 51 over a gap. In this embodiment, as an example of the electric motor, an electric motor of a radial gap type is exemplified.

The stator 51 comprises a stator core 51a, a bobbin 51b, and a stator coil 51c. The stator core 51a is formed of a plurality of electromagnetic steel plates laminated in the axial direction. The bobbin 51b is formed of an insulating material mounted to the stator core 51a. The stator coil 51c is wound around the bobbin 51b.

The rotor 52 comprises a rotor core 52a, a plurality of magnets 52b, and a rotor inner 52c. The rotor core 52a has an annular shape. The magnets 52b are mounted on an outer periphery of the rotor core 52a. The rotor inner 52c has an annular shape, and is fixed to an inner periphery of the rotor core 52a. The rotor core 52a is formed of, for example, a plurality of electromagnetic steel plates laminated in the axial direction. An axial length of the rotor inner 52c is longer than an axial length of the rotor core 52a. The rotor inner 52c thus projects on both sides of the rotor core 52a in the axial direction. The rotor inner 52c is supported freely rotatably with respect to the casing 8 by bearings 53 and 54 arranged in portions projecting from the rotor core 52a on both sides in the axial direction of the rotor inner 52c. As the bearings 53 and 54, rolling bearings that can bear both a radial load and a thrust load, for example, deep groove ball bearings can be used.

An annular recessed part 521 having an inner diameter dimension larger than those of other parts is formed in an inner peripheral surface of the rotor inner 52c. As illustrated in FIG. 1, the annular recessed part 521 is formed in, for example, an end portion of the rotor inner 52c on another side (opposite to the speed reducer 2 side) in the axial direction. A female serration 522 extending in the axial direction is formed in an inner peripheral surface of the annular recessed part 521.

As illustrated in FIG. 1, the driving-source output shaft 6 is formed into a hollow cylindrical shape opened at both ends. A space is formed on the radially inner side of the driving-source output shaft 6. The rotational driving source 1 has a structure as a hollow motor as a result of the hollow structure of the driving-source output shaft 6. An outer peripheral surface of the driving-source output shaft 6 is fitted through the loose fit to the inner peripheral surface of the rotor inner 52c (except for the annular recessed part 521). Therefore, the driving-source output shaft 6 can rotate independently of the rotor inner 52c. A male serration 6a extending in the axial direction is formed in the outer peripheral surface of an end portion of the driving-source output shaft 6 on the another side in the axial direction.

An annular gap is defined between the inner peripheral surface of the annular recessed part 521 of the rotor inner 52c and the outer peripheral surface of the driving-source output shaft 6 opposed to the inner peripheral surface. In this embodiment, the torque limiter 7 is arranged in the annular gap.

The torque limiter 7 is arranged in a torque transmission path between the motor section 5 and the driving-source output shaft 6, and has a function of transmitting rotational power output from the motor section 5 to the driving-source output shaft 6, and interrupting the torque transmission when an excessive load is applied, to thereby permit relative rotation between the motor section 5 and the driving-source output shaft 6. A torque limiter 7 having a suitable configuration can be used as long as the torque limiter 7 has the function. In this embodiment, as an example of the torque limiter 7, a case of using a multi-plate clutch, which is a type of friction clutch, is exemplified.

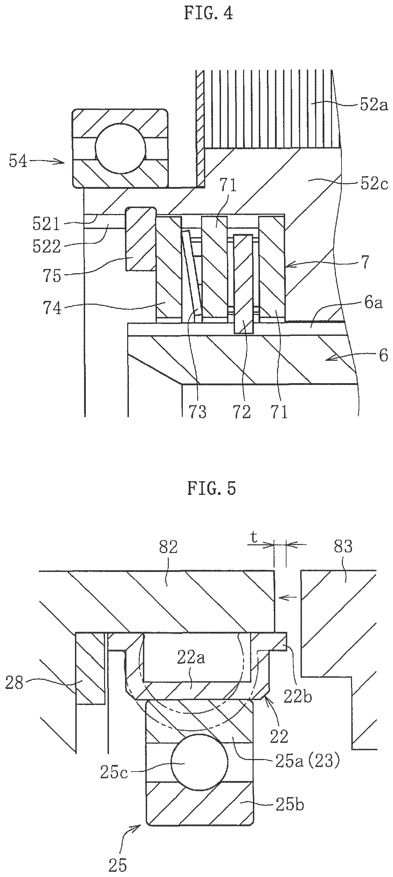

FIG. 4 is an enlarged sectional view of a region X in FIG. 1. As illustrated in FIG. 4, the multi-plate clutch as the torque limiter 7 comprises a pair of first fiction plates 71 and 71, a second friction plate 72, an elastic member 73, and a pressure plate 74. The first fiction plates 71 are arranged so as to be separated in the axial direction. The second friction plate 72 is arranged between the pair of first friction plates 71 and 71. The elastic member 73 comprises, for example, a corrugated spring configured to bring the first friction plates 71 and the second friction plate 72 into press contact with each other. The pressure plate 74 is axially positioned by a retaining ring 75 fitted in an annular groove in the inner peripheral surface of the rotor inner 52c, and is configured to apply a predetermined pressing force (axial load) to the elastic member 73.

The first friction plates 71 and the pressure plate 74 are fitted to the female serration 522 formed in the inner peripheral surface of the annular recessed part 521 of the rotor inner 52c. Moreover, the second friction plate 72 is fitted to the male serration 6a formed in the outer peripheral surface of the driving-source output shaft 6. Then, a friction force is generated between the first friction plates 71 and the second friction plate 72 through an urging force of the elastic member 73.

When a torque acing between the motor section 5 and the driving-source output shaft 6 is equal to or less than the friction force acting between both the friction plates 71 and 72, both the friction plates 71 and 72 integrally rotate, and rotational power of the motor section 5 is thus transmitted to the driving-source output shaft 6 through both the friction plates 71 and 72. Thus, the torque generated in the motor section 5 is transmitted to the final output shaft 3 through the driving-source output shaft 6 and the speed reducer 2, and an object to be driven connected to the final output shaft 3 is driven to rotate.

When the torque acing between the motor section 5 and the driving-source output shaft 6 exceeds the friction force acting between both the friction plates 71 and 72, one friction plate slips with respect to the corresponding friction plate, and the torque transmission from the motor section 5 to the driving-source output shaft 6 is thus interrupted. As a result, the relative rotation between the driving-source output shaft 6 and the rotor inner 52c can be permitted. Thus, for example, even when the object to be driven collides with an obstacle, and the rotation of the final output shaft 3 is locked, the slip occurs between the rotor inner 52c and the driving-source output shaft 6, and the toque transmission path is interrupted. As a result, even when the motor section 5 keeps rotating through inertia, an excessive load can be prevented from acting on the speed reducer 2, and the speed reducer 2 can thus be prevented from being damaged. Conversely, even when the rotational torque on the motor side excessively increases for some reason, an excessive load can be prevented from acting on the speed reducer 2 and other components.

Moreover, compared with a case in which the torque limiter 7 is arranged at a position axially adjacent to the motor section 5, an axial dimension of the rotational driving source 1 and further an axial dimension of the electric actuator can be reduced through arrangement of the torque limiter 7 between the inner peripheral surface of the rotor 52 (inner peripheral surface of the rotor inner 52c) and the outer peripheral surface of the driving-source output shaft 6 opposed to the inner peripheral surface as described above.

The casing 8 is divided at one location or a plurality of locations in the axial direction for the sake of assembly. In this embodiment, the casing 8 is divided into a bottom part 81, a tube part 82, and a lid part 83. The bottom part 81 has a bottomed cylindrical shape. The tube part 82 is opened at both ends. The lid part 83 is arranged on the one side of the tube part 82 in the axial direction. The bottom part 81 is arranged on the another side of the tube part 82 in the axial direction. The bottom part 81, the tube part 82, and the lid part 83 are integrated to one another through use of fastening means such as bolts . Out of the two bearings 53 and 54 configured to support the rotor inner 52c, the bearing 53 on the one side in the axial direction is fixed to an inner peripheral surface of the tube part 82, and the bearing 54 on the another side in the axial direction is fixed to an inner peripheral surface of the bottom part 81.

Description is now given of a configuration of the speed reducer 2, which is the principal component of the electric actuator. In this embodiment, as the speed reducer 2, a planetary-traction-drive speed reducer comprising a sun roller 21, an outside ring 22, a plurality of planetary rollers 23, and a carrier 24 is used. The traction drive means a power transmission mechanism configured to transmit a torque through an oil film under the elastohydrodynamic lubrication.

An end portion of the prime-mover output shaft 6 formed into the hollow shape on the one side in the axial direction is at a position projecting on the one side in the axial direction with respect to the motor section 5. The end portion of the prime-mover output shaft 6 on the one side in the axial direction functions as the hollow sun roller 21 forming the speed reducer 2. A portion of the prime-mover output shaft 6 excluding the sun roller 21 constitutes a space without other members on the radially inner side. The electric actuator according to this embodiment has such a structure that the prime-mover output shaft 6 and the sun roller 21 are integrated to each other, but the prime-mover output shaft 6 and the sun roller 21 may be formed of independent members. For example, the sun roller 21 having a ring shape may be fixed to an outer periphery of the prime-mover output 6 by means of press fitting or other methods.

Each of the planetary rollers 23 of the speed reducer 2 comprises a rolling bearing 25. As illustrated in FIG. 3, the rolling bearing 25 comprises an outer ring 25a, an inner ring 25b, and a plurality of rolling elements 25c. The outer ring 25a comprises an outer raceway surface. The inner ring 25b comprises an inner raceway surface. The rolling elements 25c are arranged between the outer raceway surface of the outer ring 25a and the inner raceway surface of the inner ring 25b. The respective rolling elements are held at equal intervals in a circumferential direction by a cage (not shown). The inner ring 25b of each of the rolling bearings 25 is press-fitted over and fixed to a hollow shaft 26. Each of the shafts 26 is supported by the carrier 24 so as to be revolvable. As the rolling bearing 25, for example, a deep groove ball bearing is used. The outer ring 25a of the rolling bearing 25 functions as the planetary roller 23 freely rotatably supported with respect to the shaft 26.

In a general rolling bearing, a gap between an inner peripheral surface of the outer ring 25a and an outer peripheral surface of the inner ring 25b is sealed by seal members, but the rolling bearings 25 forming the planetary rollers 23 do not comprise seal members of this type. Thus, lubrication of the inside of each of the rolling bearings 25 is executed by lubricant (such as grease) sealed inside the speed reducer 2 for forming oil films in respective rolling contact portions.

FIG. 5 is an enlarged sectional view of a region Y in FIG. 1. As illustrated in FIG. 5, the outside ring 22 integrally comprises a main body part 22a and flange parts 22b. The main body part 22a has a U shape in cross section. The flange parts 22b respectively project on both sides of the main body part 22a in the axial direction. Under a state before the tube part 82 and the lid part 83 of the casing 8 are coupled to each other, the flange part 22b of the outside ring 22 on the one side in the axial direction received on the inner periphery of the tube part 82 projects from an end surface of the tube part 82 as indicated by solid lines in FIG. 5. Then, when the lid part 83 is pressed until the lid part 83 abuts against the end surface of the tube part 82, and the lid part 83 and the tube part 82 are coupled to each other through use of bolts or other members, the outside ring 22 pressed by the lid part 83 elastically deforms as indicated by long dashed double-short dashed lines, and the main body part 22a expands toward the radially inner side (in FIG. 5, a degree of the elastic deformation is exaggerated).

The rolling contact portions between the outside ring 22 and the planetary rollers 23 and further the rolling contact portions between the planetary rollers 23 and the sun roller 21 are brought into a press contact state through the elastic deformation of the outside ring 22, and tractions (preloads) are applied to the respective rolling contact portions. From this configuration, the planetary-traction-drive speed reducer 2 comprising the sun roller 21, the outside ring 22, the planetary rollers 23, and the carrier 24 is formed.

An adjustment member 28 having a ring shape is arranged between the flange part 22b of the outside ring 22 on the another side in the axial direction and the tube part 82. Under the state before the assembly of the lid part 83, the degree of the deformation of the outside ring 22 is uniformed through selection and use (matching) of the adjustment member 28 having such an appropriate thickness that a projection amount "t" of the flange part 22b of the outside ring 22 from the end surface of the tube part 82 is within a prescribed range. As a result, the traction applied to the inside of the speed reducer 2 can be uniformed.

The final output shaft 3 is fixed by means of the press fitting or other methods to an inner peripheral surface of a hollow shaft portion of the carrier 24 on the output side of the speed reducer 2. An end portion of the final output shaft 3 on the another side in the axial direction is freely rotatably supported by a rolling bearing 31 (such as a deep groove ball bearing), which is fixed to an outer periphery of the end portion of the final output shaft 3, with respect to the diver-source output shaft 6. With this configuration, the final output shaft 3 is rotated in forward/reverse directions through drive of the motor section 5 in forward/reverse directions, and the object to be driven is thus driven to rotate in forward/reverse directions.

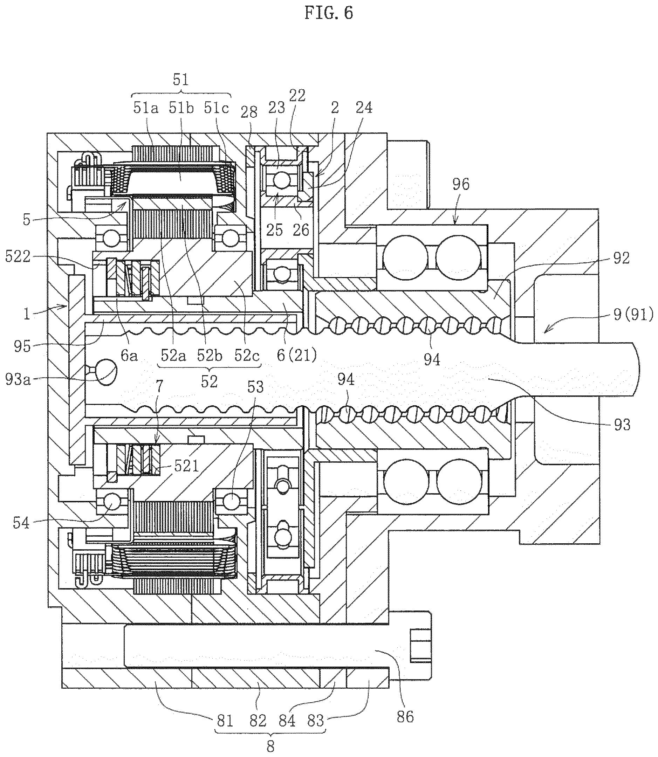

Description is now given of an electric actuator of the linear motion type as a second embodiment of the present invention. This electric actuator of the linear motion type is used for, for example, an electric brake installed in a vehicle such as a motor vehicle, and has a structure illustrated in FIG. 6. The electric actuator according to the second embodiment has a configuration common to that in the first embodiment from the motor section 5 to the speed reducer 2. Thus, the speed reducer 2 is formed of a planetary-traction-drive speed reducer. Each of the planetary rollers 23 thereof is formed of the rolling bearing 25 (deep groove ball bearing) . The second embodiment is different from the first embodiment mainly in such a point that a motion conversion mechanism 9 is used in place of the final output shaft 3.

The motion conversion mechanism 9 is formed of, for example, a ball screw or a lead screw comprising a nut and a screw shaft. In this embodiment, a case in which a ball screw 91 is used as the motion conversion mechanism 9 is exemplified. The ball screw 91 comprises a ball screw nut 92, a ball screw shaft 93, a large number of balls 94, and an internal deflector (not shown) as principal components. The internal deflector serves as a circulation member. A spiral groove is formed in an inner peripheral surface of the ball screw nut 92. A spiral groove is formed in an outer peripheral surface of the ball screw shaft 93. The balls 94 are loaded between both the spiral grooves. The hollow shaft portion of the carrier 24 on an output side of the speed reducer 2 is fixed by means of the press fitting or other methods to the outer peripheral surface of the ball screw nut 92.

A guide member 95, which has a hollow tubular shape and is fixed to a bottom part 81 of the casing 8, is arranged on the radially inner side of the hollow driving-source output shaft 6. Guide grooves (not shown) extending in the axial direction are formed in an inner periphery of the guide member 95. Projections projecting in the radial direction are formed on the ball screw shaft 93 through press-fitting of a pin into a hole 93a formed in another end portion of the ball screw shaft 93 in the axial direction, and the projections are fitted to the guide grooves of the guide member 95, thereby being capable of stopping the rotation of the ball screw shaft 93, which is not illustrated in detail.

The casing 8 in the second embodiment comprises the bottom part 81, the tube part 82, the lid part 83, and a pressing part 84. Configurations and functions of the bottom part 81 and the tube part 82 are common to those of the bottom part 81 and the tube part 82 described in the first embodiment. The pressing part 84 is sandwiched between the tube part 82 and the lid part 83. An end surface of the pressing part 84 is brought into press contact with an end surface of the tube part 82 through use of bolt members 86 to integrally couple the bottom part 81, the tube part 82, the lid part 83, and the pressing part 84 to one another, and the outside ring 22 pressed by the pressing part 84 elastically deforms toward the radially inner side as in the first embodiment. Therefore, tractions (preloads) are applied to the respective rolling contact portions of the planetary-traction-drive speed reducer 2 serving as the speed reducer 2.

The ball screw nut 92 is freely rotatably supported with respect to the lid part 83 of the casing 8 by a double-row rolling bearing 96 (such as a double-row deep groove ball bearing) fixed to an outer peripheral surface of the ball screw nut 92. An axial load acting on the ball screw shaft 93 can be borne by the rolling bearing 96. Moreover, the ball screw nut 92 is structured so as to be supported on both sides, thereby being capable of preventing an inclination of the ball screw nut 92.

Also in the second embodiment, the torque of the motor section 5 is transmitted to the ball screw nut 92 through the torque limiter 7, the driving-source output shaft 6, and the speed reducer 2. Thus, the ball screw nut 92 can be rotated in the forward/reverse directions through the drive of the motor section 4 in the forward/reverse directions, thereby being capable of moving forward/backward (moving linearly) the ball screw shaft 93 in the axial direction.

As described above, in the electric actuator according to the present invention, the planetary-traction-drive speed reducer is used as the speed reducer 2. Therefore, a backlash is reduced compared with a case in which a planetary-gear speed reducer is used as the speed reducer 2. Thus, irrespective of whether the electric actuator is the rotational motion type (first embodiment) or the linear motion type (second embodiment), an increase in responsiveness as well as an increase in silence of the electric actuator can be achieved.

A fluctuating load is generated in a torque transmission part in a power transmission such as a planetary-gear speed reducer, which uses meshing among gears. Thus, when a high torque is transmitted, a needle roller bearing having a high load capacity in the radial direction is often used as a bearing for supporting the gears. In contrast, when the traction drive speed reducer 2 is employed, only the constant load (preload) for generating the traction acts on each of the rolling contact portions of the speed reducer 2, and a fluctuating load hardly acts. Thus, not needle rollers, but balls can be used as the rolling elements 25c of the rolling bearing 25 forming the planetary roller 23. Therefore, not a needle roller bearing used for a high torque, but a deep groove ball bearing used for a low torque can be used as the rolling bearing 25. Thus, a reduction in torque of the electric actuator can be achieved. The deep groove ball bearing is not be broken apart during assembly of the electric actuator, and such an advantage that workability of the assembly is increased is also provided.

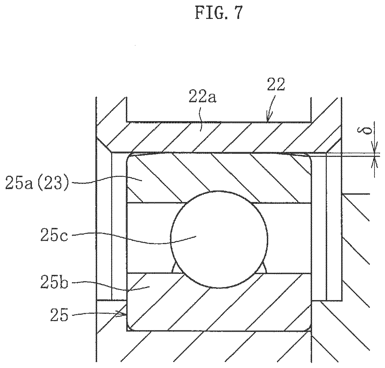

The outer ring 25a of each of the rolling bearings 25 and the outer peripheral surface of the driving-source output shaft 6, which are held in rolling contact with each other, are held in press contact with each other in a state of a high surface pressure in the planetary-traction-drive speed reducer 2. Therefore, an edge load is generated at an end portion of each of the rolling contact portions, and may reduce fatigue lives of the outer ring 25a and the driving-source output shaft 6. As illustrated in FIG. 7, it is preferred that crowning be formed on the outer peripheral surface of the outer ring 25a in order to suppress the edge load (in FIG. 7, a drop amount δ of the crowning is exaggerated, but an actual drop amount δ is approximately some tens of micrometers) . The outer peripheral surface of the driving-source output shaft 6 may have crowning, or both the outer peripheral surface of the outer ring 25a and the outer peripheral surface of the driving-source output shaft 6 may have crowning . The edge load is reduced through formation of crowning on one or both of the rolling contact surfaces in such a manner, thereby being capable of increasing the fatigue lives of the outer ring 25a and the driving-source output shaft 6. As the crowning, full crowning as well as the partial crowning illustrated in FIG. 7 may be employed. Moreover, as the crowning, the arc crowning having one or a plurality of arcs as a shape of a generating line as well as the logarithmic crowning having a shape of a generating line approximated to a logarithmic curve can be used.

The inner peripheral surface of the outside ring 22 and the outer peripheral surface of the outer ring 25a of each of the rolling bearings 25 are also held in press contact with each other at a high surface pressure, and the inner peripheral surface of the outside ring 22 may have crowning from the perspective of the edge load prevention. However, this embodiment has such a structure that the surface pressure increases in a vicinity of a center portion of the rolling contact portion in the axial direction when the main body part 22a of the outside ring 22 deforms, and thus the edge load is less likely to be generated in the end portion of the rolling contact portion. Thus, necessity for forming crowning on the inner peripheral surface of the outside ring 22 is low.

In the electric actuator of the linear motion type described in the second embodiment, a space for the forward/backward movement of the ball screw shaft 93 is necessary. Accordingly, when the motor section 5 and the speed reducer 2 are arranged adjacent to each other in the axial direction, the ball screw shaft 93 moving forward/backward may interfere with the motor section 5 or the speed reducer 2 . In order to avoid this interference, the ball screw shaft 93 needs to be arranged eccentrically with respect to axial centers of the motor section 5 and the speed reducer 2, and the size of the electric actuator thus increases.

In contrast, in the second embodiment, a space for receiving the ball screw shaft 93 is secured on the radially inner side of the driving-source output shaft 6 through use of the hollow driving-source output shaft 6 so that the rotational driving source 1 has the hollow structure. Further, the sun roller 21 forming the speed reducer 2 also has the hollow structure. Thus, the ball screw shaft 93 can be arranged on the radially inner side of the motor section 5 and further the speed reducer 2 coaxially with the motor section 5 and the speed reducer 2. Therefore, the downsizing of the electric actuator of the linear motion type can be achieved.

When the electric actuator according to the first embodiment (rotational motion type) illustrated in FIG. 1 and the electric actuator according to the second embodiment (linear motion type) illustrated in FIG. 6 are compared with each other, the rotational driving sources 1 and the speed reducers 2 have the configurations practically common to each other. Therefore, the rotational driving source 1 and the speed reducer 2 may be shared between the electric actuators of both of the types. That is, in the electric actuator according to the first embodiment, a basic structure of the electric actuator according to the second embodiment can be obtained through use of the ball screw 91 in place of the final output shaft 3, and arrangement of the ball screw shaft 93 on the inner periphery of the driving-source output shaft 6. The cost reduction of the electric actuator can be achieved through sharing of the rotational driving source 1 and the speed reducer 2 in such a way. Moreover, an increase in variation of the electric actuators as the rotational motion type and the linear motion type is promoted, and potential of the product deployment can thus be enhanced.

The description of the embodiments is given of the case in which the configuration of deforming the outside ring 22 toward the radially inner side when the lid part 83 is mounted is employed as the mechanism of applying the tractions to the planetary-traction-drive speed reducer 2, but a mechanism having a suitable configuration may be employed as the mechanism of applying the tractions . For example, tractions can be applied to the rolling contact portions in the speed reducer 2 by, for example, press-fitting the outside ring 22 into the inner peripheral surface of the casing 8 at a predetermined interference, to thereby reduce the diameter of the outside ring 22 toward the radially inner side. In this case, it is preferred that the inner peripheral surface of the outside ring 22 have crowning for preventing an edge load.

Moreover, the electric motor of the radial gap type is exemplified as the motor section 5 in the description, but a motor suitably configured may be employed. For example, an electric motor of the axial gap type comprising stators fixed to a casing and a rotor arranged so as to be opposed to the stators over gaps on an axially inner side of the stators may be employed.

The present invention is not limited to the above-mentioned embodiments. As a matter of course, the present invention may be carried out in various modes without departing from the spirit of the present invention. The scope of the present invention is defined in claims, and encompasses equivalents described in claims and all changes within the scope of claims.

### Reference Signs List

- 1: rotational driving source
- 2: speed reducer
- 3: final output shaft
- 5: motor section
- 6: driving-source output shaft
- 6a: male serration
- 7: torque limiter
- 8: casing
- 21: sun roller
- 22: outside ring
- 23: planetary roller
- 24: carrier
- 25: rolling bearing (deep groove ball bearing)
- 25a: outer ring
- 25b: inner ring
- 25c: rolling element
- 51: stator
- 52: rotor

## Claims

1. An electric actuator, comprising:
a motor section comprising a stator and a rotor;
a driving-source output shaft, which is arranged on a radially inner side of the rotor, and is configured to output rotation of the rotor; and
a speed reducer connected to the driving-source output shaft,
wherein the driving-source output shaft is hollow, and
wherein the speed reducer comprises a planetary-traction-drive speed reducer.

2. The electric actuator according to claim 1, wherein a planetary roller of the planetary-traction-drive speed reducer is formed of a rolling bearing.

3. The electric actuator according to claim 2, wherein the rolling bearing comprises a deep groove ball bearing.

4. The electric actuator according to any one of claims 1 to 3, wherein any one of or both of the planetary roller and a sun roller have crowning.

5. The electric actuator according to any one of claims 1 to 4, further comprising a final output shaft connected to an output side of the speed reducer.

6. The electric actuator according to any one of claims 1 to 4, further comprising a motion conversion mechanism connected to an output side of the speed reducer.
